# EUROPÄISCHE PATENTSCHRIFT

(11) **EP 1 905 545 B1**
(45) Veröffentlichungstag und Bekanntmachung des Hinweises auf die Patenterteilung: **02.06.2010**
(21) Anmeldenummer: 07008386.0
(22) Anmeldetag: 25.04.2007
(51) Int. Cl.: B25B 27/30

(54) **Federspanner für Schraubenfedern**
Spring compressor for coil springs
Tendeur à ressort pour ressort cylindrique

(30) Priorität: 28.09.2006 DE 202006014999 U
(43) Veröffentlichungstag der Anmeldung: 02.04.2008
(73) Patentinhaber: Hazet-Werk Hermann Zerver GmbH & Co. KG, D-42857 Remscheid (DE)
(72) Erfinder: Welp, Peter, 42929 Wermelskirchen (DE); Piel, Thomas, 51145 Köln (DE)
(74) Vertreter: Ksoll, Peter

(56) Entgegenhaltungen:
- EP-A- 0 271 782
- DE-A1- 3 733 723
- DE-U1-202004 006 807

## Beschreibung

Die Erfindung betrifft einen Federspanner für Schraubenfedern gemäß den Merkmalen im Oberbegriff von Anspruch 1.

Ein solcher Federspanner zählt durch die DE 20 2004 006 807 U1 zum Stand der Technik. Der Federspanner hat sich in der Praxis grundsätzlich sehr gut bewährt. Vorteilhaft hieran ist unter anderem die kugelkalottenartige Lagerung der antriebsseitigen Spannplatte am Druckstück des Spanngeräts. Dies ermöglicht begrenzte Schwenkbewegungen zwischen der durch die Schraubenfeder belasteten Spannplatte und dem Druckstück und damit ein Ausrichten des Spanngeräts in der Schraubenfeder.

Bei verschiedenen Schraubenfedern, insbesondere solchen mit sehr hohen Federkräften oder bei ungünstigen Einbauverhältnissen kann es unter Last bei gespannter Schraubenfeder dazu kommen, dass die Selbsthemmung der antriebsseitigen Spannplatte überwunden wird, so dass sich die Feder im System dreht. Dies kann dazu führen, dass die Schraubenfeder einen Öffnungsweg vollzieht und länger wird, womit ein Sicherheitsrisiko verbunden ist.

Der Erfindung liegt daher ausgehend vom Stand der Technik die Aufgabe zugrunde, einen gattungsgemäßen Federspanner anwendungs- und sicherheitstechnisch zu verbessern.

Die Lösung dieser Aufgabe besteht nach der Erfindung in einem Federspanner mit den Merkmalen von Anspruch 1.

Erfindungsgemäß ist eine Verdrehsicherung zwischen der zweiten antriebsseitigen Spannplatte und dem Druckstück des Spanngeräts vorgesehen. Hierzu weist die zweite Spannplatte auf ihrer der Spannfläche abgewandten Außenseite umfangsseitig des Durchbruchs sich radial erstreckende Taschen auf. Am Druckstück sind zumindest zwei radial vorstehende Widerlagerkörper zum Eingriff in jeweils eine der Taschen angeordnet. Unter Last kommt zumindest ein Widerlagerkörper mit einer der Taschen zum Eingriff. Hierdurch wird eine zuverlässige Verdrehsicherung gewährleistet und ein Drehen der Feder im gespannten Zustand innerhalb des Federspanners vermieden.

Die erfindungsgemäße Ausgestaltung bringt weiterhin eine Montageerleichterung mit sich, weil sich die beiden Spannplatten gegeneinander orientieren und festsetzen.

Vorteilhafte Ausgestaltungen und Weiterbildungen des erfindungsgemäßen Federspanners sind Gegenstand der abhängigen Ansprüche 2 bis 5.

Gemäß einer besonders vorteilhaften Ausgestaltung der Erfindung ist vorgesehen, dass die Taschen kranzförmig um den Durchbruch herum angeordnet sind. Die Taschen sind so nach Art einer gerundeten Rastverzahnung umlaufend um den Durchbruch herum positioniert. Dies gewährleistet ein sehr präzises Zusammenwirken zwischen der Spannplatte und dem Druckstück. Bereits nach einem sehr kurzen Axialweg kommt ein Widerlagerkörper in eine der Taschen zum Eingriff. Unter Last bleibt auch immer mindestens einer der Widerlagerkörper in Eingriff mit einer Tasche. Die Kraftaufnahme am Druckstück und die Verdrehsicherung sind voneinander getrennt.

Vorzugsweise sind die Widerlagerkörper durch Zylinderstifte gebildet, welche in Radialbohrungen im Druckstück gehalten sind. Demzufolge weisen die Taschen gerundete Aufnahmeabschnitte für die Widerlagerkörper auf.

Zweckmäßigerweise sind die Zylinderstifte in die Radialbohrungen des Druckstücks eingeschraubt. Hierzu besitzen die Zylinderstifte an ihrem freien Ende eine Betätigungsfläche. Insbesondere ist das freie Ende mit einem Schlitz zum Ansetzen eines Schraubendrehers versehen.

Die Erfindung ist nachfolgend anhand eines Ausführungsbeispiels näher beschrieben. Es zeigen:
- Figur 1: einen erfindungsgemäßen Federspanner in einer perspektivischen Darstellung;
- Figur 2: ebenfalls in einer Perspektive den Federspanner mit Schraubenfeder;
- Figur 3: eine Ansicht auf die Darstellung der Figur 1 gemäß dem Pfeil A und
- Figur 4: einen vertikalen Querschnitt durch das antriebsseitige Ende des Federspanners der Figur 3 entlang der Linie B-B.

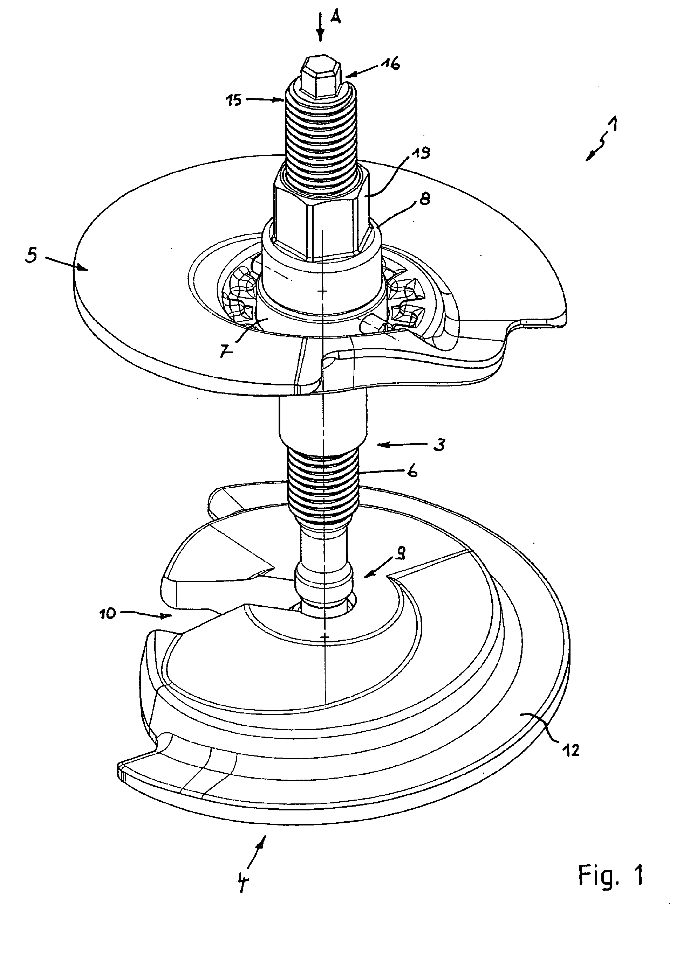

Der anhand der Figuren 1 bis 4 erläuterte Federspanner 1 dient zum Spannen von Schraubenfedern 2 von Kfz-Federdämpferbeinen.

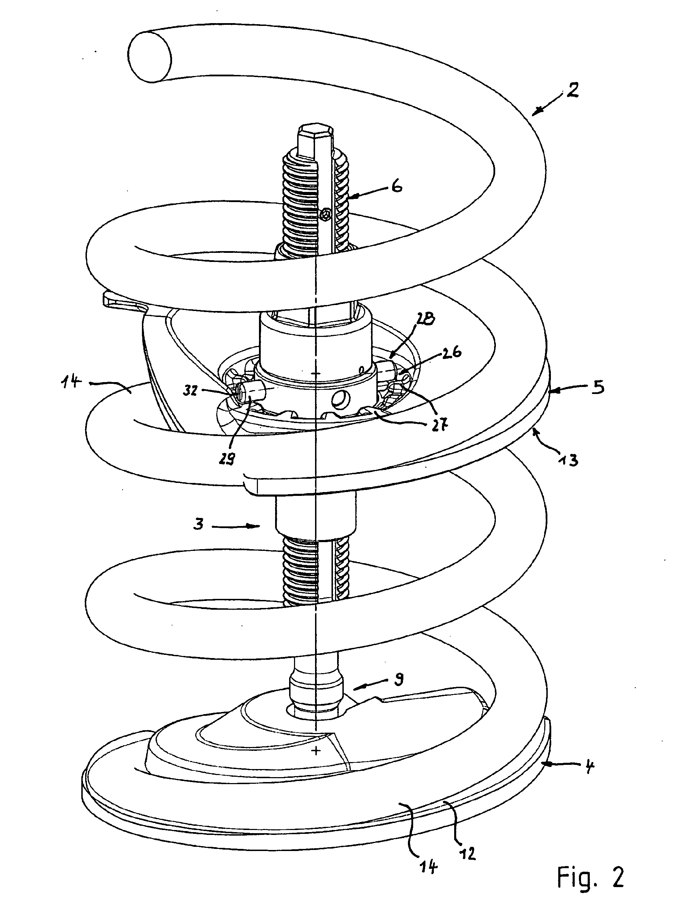

Der Federspanner 1 umfasst im wesentlichen ein Spanngerät 3 sowie zwei mit dem Spanngerät 3 koppelbare Spannplatten 4, 5. Das Spanngerät 3 weist eine Gewindespindel 6 auf, auf der ein Druckstück 7 mittels einer Spannmutter 8 axial verlagerbar ist. Die erste Spannplatte 4 ist mit einem ersten verdickten Ende 9 der Gewindespindel 6 koppelbar. Die erste Spannplatte 4 besitzt einen Querschlitz 10, an dessen innerem Ende eine hier nicht ersichtliche Kalotte ausgebildet ist, in welchem das verdickte Ende 9 der Gewindespindel 6 zum Eingriff gelangt. Die zweite Spannplatte 5 besitzt einen zentralen Durchbruch 11, über welchen sie mit dem Druckstück 7 koppelbar ist. Wie die Figur 2 zeigt, besitzt jede Spannplatte 4, 5 jeweils eine Spannfläche 12, 13 zur Anlage an jeweils einer Federwindung 14 der Schraubenfeder 2.

Stirnseitig am zweiten Ende 15 der Gewindespindel 6 befindet sich ein Antrieb 16 in Form eines axialen Vorsprungs mit Schlüsselflächen zum Ansetzen eines Werkzeugs. Durch Drehen der Gewindespindel 6 mit Hilfe des Antriebs 16 kann das Druckstück 7 verstellt werden. Das Druckstück 7 kann auf der Gewindespindel 6 gleiten. Es liegt mit einem Ringkranz 17 an einem Axiallager 18, das in die Spannmutter 8 eingesetzt ist. Die Spannmutter 8 kann über Schlüsselflächen 19 mit Hilfe eines geeigneten Werkzeugs entlang der Gewindespindel 6 verlagert bzw. gegenüber dieser festgehalten werden. Am spannplattenseitigen Ende besitzt das Druckstück 7 eine kugelabschnittsförmige Druckfläche 20 zum Eingriff in eine entsprechend konfigurierte kugelabschnittsförmige Kalotte 21 umfangsseitig des zentralen Durchbruchs 11 in der zweiten Spannplatte 5. Die Kalotte 21 erweitert sich zur Außenseite 22 der zweiten Spannplatte 5 hin. Auf der der Kalotte 21 abgewandten Innenseite 23 besitzt die zweite Spannplatte 5 eine Ringwulst 24 zum Eingriff in eine Federwindung 14. Der Ringwulst 24 geht in die Spannfläche 13 über, die vorsprungslos in den Außenumfang der zweiten Spannplatte 5 übergeht. Die Steigung der Spannfläche 13 ist der Steigung der Schraubenfeder 2 angepasst.

Man erkennt des Weiteren, dass sich an die Druckfläche 20 des Druckstücks 7 ein Stutzen 25 angliedert. Der Stutzen 25 dient der Abstützung und der Führung des Druckstücks 7 auf der Gewindespindel 6.

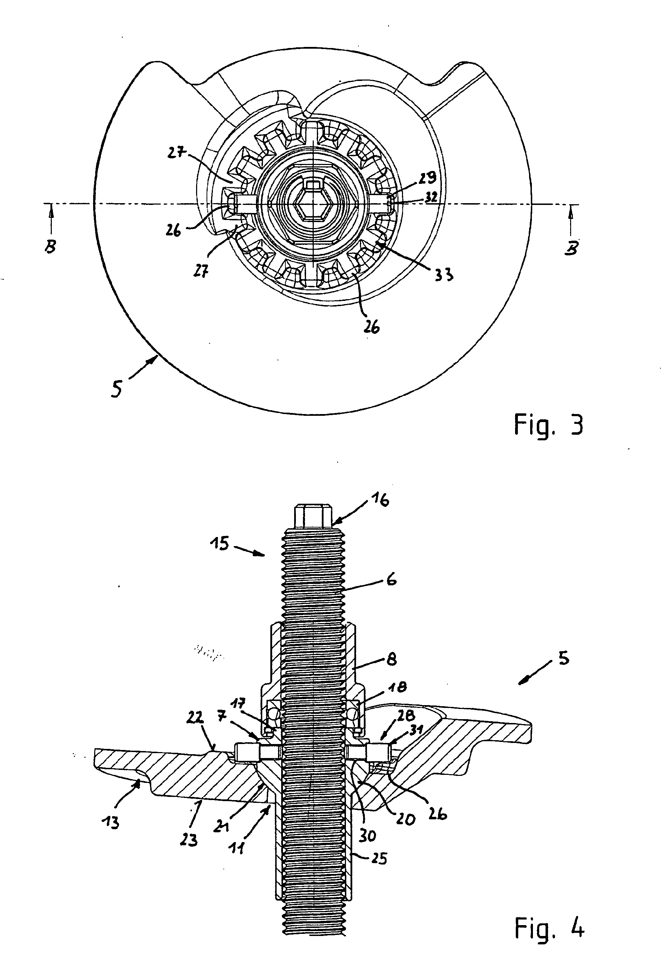

Auf ihrer der Spannfläche 13 abgewandten Außenseite 22 weist die zweite Spannplatte 5 umfangsseitig des Durchbruchs 11 sich radial erstreckende Taschen 26 auf, welche von dazwischen liegenden Rippen begrenzt sind. Wie insbesondere die Figur 3 zeigt, sind die Taschen 26 kranzförmig um den Durchbruch 11 herum angeordnet. Am Druckstück 7 sind zwei radial vorstehende Widerlagerkörper 28 zum Eingriff in jeweils eine der Taschen 26 vorgesehen. Die Widerlagerkörper 28 sind durch Zylinderstifte 29 gebildet, die in Radialbohrungen 30 im Druckstück 7 eingeschraubt sind. Zur Erleichterung der Montage der Zylinderstifte 29 besitzen diese an ihrem freien Ende 31 eine Betätigungsfläche 32 in Form eines Schlitzes zum Ansetzen eines Schraubendrehers.

Zum Spannen der Schraubenfeder 2 wird zunächst der zweite Spannteller 5 zwischen zwei Federwindungen 14 quer eingeschoben. Anschließend wird die Gewindespindel 6 in Längsrichtung der Schraubenfeder 2 durch den zentralen Durchbruch 11 im zweiten Spannteller 5 geschoben, bis das Druckstück 7 an der zweiten Spannplatte 5 zur Anlage gelangt. Anschließend wird der erste Spannteller 4 ebenfalls zwischen zwei Federwindungen 14 der Schraubenfeder 2 quer eingefädelt. Durch Verlagerung des Druckstücks 7 auf der Gewindespindel 6 relativ zum ersten Ende 9 des Spanngeräts 3 werden die Spannplatten 4, 5 aufeinander zu bewegt und die Schraubenfeder gespannt. Beim Verlagern des Druckstücks 7 gelangt zumindest ein Zylinderstift 29 in einer Tasche 26 in Eingriff. Die Taschen 26 weisen gerundete Aufnahmeabschnitte 33 für die Zylinderstifte auf. Der mit einer Tasche 26 in Eingriff stehende Zylinderstift 28 gewährleistet eine Verdrehsicherung der antriebsseitigen zweiten Spannplatte 5. Hierdurch ist die Schraubenfeder 2 auch unter Last sicher im Spanngerät 3 gehalten. Ein Drehen der Schraubenfeder im gespannten Federspanner 1 wird zuverlässig unterbunden.

Wie insbesondere die Figur 4 zeigt, lässt die erfindungsgemäße Verdrehsicherung eine begrenzte Schwenkbewegung der Spannplatte 5 relativ zum Druckstück 7 zu, so dass die gewünschte Pendelcharakteristik erhalten bleibt. Man erkennt, dass der in Bildebene linke Zylinderstift 29 mit einer Tasche 26 in Eingriff steht, wohingegen der diametral gegenüber liegende Zylinderstift 29 aus einer Tasche 26 herausgehoben ist. Im nicht eingeschwenkten Zustand der Zylinderstifte 29 lässt sich die Spannplatte 5 noch so lange auf der Gewindespindel 6 bzw. gegen das Druckstück 7 verdrehen, wie ein freier Axialweg von ca. 1,5 mm vorhanden ist. Im eingeschwenkten Zustand ist ein Kippen um ungefähr 3° möglich. Es verbleibt immer zumindest einer der beiden Zylinderstifte 29 im Eingriff mit einer Tasche 26. Die Kraftaufnahme zwischen Druckstück 7 und Spannplatte 5 einerseits und die Verdrehsicherung der beiden Komponenten erfolgen getrennt voneinander.

### Bezugszeichen:

- 1 -: Federspanner
- 2 -: Schraubenfeder
- 3 -: Spanngerät
- 4 -: erste Spannplatte
- 5 -: zweite Spannplatte
- 6 -: Gewindespindel
- 7 -: Druckstück
- 8 -: Spannmutter
- 9 -: erstes Ende v. 6
- 10 -: Querschlitz
- 11 -: Durchbruch
- 12 -: Spannfläche
- 13 -: Spannfläche
- 14 -: Federwindung
- 15 -: zweites Ende v. 6
- 16 -: Antrieb
- 17 -: Ringkranz
- 18 -: Axiallager
- 19 -: Schlüsselfläche
- 20 -: Druckfläche
- 21 -: Kalotte
- 22 -: Außenseite v. 5
- 23 -: Innenseite v. 5
- 24 -: Ringwulst
- 25 -: Stutzen
- 26 -: Tasche
- 27 -: Rippe
- 28 -: Widerlagerkörper
- 29 -: Zylinderstift
- 30 -: Radialbohrung
- 31 -: Ende v. 29
- 32 -: Betätigungsfläche
- 33 -: Aufnahmeabschnitt

## Patentansprüche

1. Federspanner für Schraubenfedern (2) bestehend aus einem in eine zu spannende Schraubenfeder (2) axial einführbaren Spanngerät (3) sowie zwei mit dem Spanngerät (3) koppelbaren Spannplatten (4, 5), welche jeweils eine Spannfläche (12, 13) zur Anlage an jeweils einer Federwindung (14) der Schraubenfeder (2) aufweisen, wobei die erste Spannplatte (4) mit einem ersten Ende (9) des Spanngeräts (3) koppelbar ist und die zweite Spannplatte (5) einen Durchbruch (11) aufweist und über den Durchbruch (11) mit einem relativ zum ersten Ende (9) des Spanngeräts (3) verlagerbaren Druckstück (7) des Spanngeräts (3) koppelbar ist, wobei der Durchbruch (11) in der zweiten Spannplatte (5) eine sich zur Außenseite (22) hin erweiternde, kugelabschnittsförmigen Kalotte (21) aufweist, in welcher eine daran angepasste Druckfläche (20) des Druckstücks (7) zur Anlage gelangt, **dadurch gekennzeichnet, dass** die zweite Spannplatte (5) auf ihrer der Spannfläche (13) abgewandten Außenseite (22) umfangsseitig des Durchbruchs (11) sich radial erstreckende Taschen (26) aufweist und am Druckstück (7) zumindest zwei radial vorstehende Widerlagerkörper (28) zum Eingriff in jeweils eine der Taschen (26) vorgesehen sind.

2. Federspanner nach Anspruch 1, **dadurch gekennzeichnet, dass** die Taschen (26) kranzförmig um den Durchbruch (11) herum angeordnet sind.

3. Federspanner nach Anspruch 1 oder 2, **dadurch gekennzeichnet, dass** die Taschen (26) gerundete Aufnahmeabschnitte (33) für die Widerlagerkörper (28) aufweist.

4. Federspanner nach einem der Ansprüche 1 bis 3, **dadurch gekennzeichnet, dass** die Widerlagerkörper (28) durch Zylinderstifte (29) gebildet sind, welche in Radialbohrungen (30) im Druckstück (7) gehalten sind.

5. Federspanner nach Anspruch 4, **dadurch gekennzeichnet, dass** die Zylinderstifte (29) an ihren freien Enden (31) eine Betätigungsfläche (32) aufweisen.

## Claims

1. Spring tensioner for helical springs (2) consisting of a tensioning device (3) which can be axially introduced into a helical spring (2) which is to be tensioned and two clamping plates (4, 5) which can coupled with the tensioning device (3), each clamping plate having a clamping surface (12, 13) for resting against each spring winding (14) of the helical spring (2), wherein the first clamping plate (4) can be coupled with a first end (9) of the tensioning device (3) and the second clamping plate (5) has an opening (11) and can be coupled, via the opening (11), with a thrust piece (7) of the tensioning device (3) which is displaceable relative to the first end (9) of the tensioning device (3), the opening (11) in the second clamping plate (5) having a spherical cap (21) in the shape of a spherical segment expanding towards the outer side (22), in which a contact surface (20) of the thrust piece (7) adapted thereto comes to rest, **characterised in that** the second clamping plate (5), on its outer side (22) facing away from the clamping surface (13), has pockets (26) extending radially on the periphery of the opening (11) and at least two radially projecting abutment members (28) are provided on the thrust piece (7), each to engage in one of the pockets (26).

2. Spring tensioner according to claim 1, **characterised in that** the pockets (26) are arranged around the opening (11) in the form of a collar.

3. Spring tensioner according to claim 1 or 2, **characterised in that** the pockets (26) have rounded recess sections (33) for the abutment members (28).

4. Spring tensioner according to one of claims 1 to 3, **characterised in that** the abutment members (28) are formed by parallel straight pins (29), which are retained in radial holes (30) in the thrust piece (7).

5. Spring tensioner according to claim 4, **characterised in that** the parallel straight pins (29) have an operating area (32) on their free ends (31).

## Revendications

1. Tendeur de ressort pour ressorts hélicoïdaux (2), constitué d'un dispositif tendeur (3) à introduire axialement dans un ressort hélicoïdal (2) à tendre, ainsi que de deux plaques de tendeur (4, 5) à accoupler avec le dispositif tendeur (3), lesquelles plaques de tendeur présentent chacune une surface de tendeur (12, 13) destinée à venir en appui contre une spire respective (14) du ressort hélicoïdal (2), la première plaque de tendeur (4) pouvant être accouplée avec une première extrémité (9) du dispositif tendeur (3) et la deuxième plaque de tendeur (5) présentant une ouverture (11) et pouvant être accouplée via l'ouverture (11) avec une pièce de compression (7) du dispositif tendeur (3) déplaçable par rapport à la première extrémité (9) du dispositif tendeur (3), l'ouverture (11) dans la deuxième plaque de tendeur (5) comprenant une calotte (21) en forme de calotte sphérique s'élargissant vers la face extérieure (22) et dans laquelle vient en appui une surface de pression (20) de la pièce de compression (7) adaptée à la callotte,
**caractérisé en ce que** la deuxième plaque de tendeur (5) comporte, sur sa face extérieure (22) détournée de la surface de tendeur (13) et du côté périphérique de l'ouverture (11), des poches (26) qui s'étendent radialement, et au moins deux corps de contre-appui (28) qui dépassent radialement sont prévus sur la pièce de compression (7) en vue de l'engagement dans l'une des poches respectives (26).

2. Tendeur de ressort selon la revendication 1, **caractérisé en ce que** les poches (26) sont agencées tout autour de l'ouverture (11) en formant une couronne.

3. Tendeur de ressort selon la revendication 1 ou 2, **caractérisé en ce que** les poches (26) comprennent des tronçons de réception arrondis (33) pour les corps de contre-appui (28).

4. Tendeur de ressort selon l'une des revendications 1 à 3, **caractérisé en ce que** les corps de contre-appui (28) sont formés par des tiges cylindriques (29) qui sont maintenues dans des perçages radiaux (30) dans la pièce de compression (7).

5. Tendeur de ressort selon la revendication 4, **caractérisé en ce que** les tiges cylindriques (29) comportent une surface d'actionnement (32) à leurs extrémités libres (31).
